(19)

**Europäisches Patentamt**
**European Patent Office**
**Office européen des brevets**

(11)  **EP 4 145 723 B1**

(12)  # EUROPEAN PATENT SPECIFICATION

(45) Date of publication and mention
of the grant of the patent:
**12.06.2024   Bulletin 2024/24**

(21) Application number: **21729927.0**

(22) Date of filing: **27.04.2021**

(51) International Patent Classification (IPC):
**H04B 10/61** $^{(2013.01)}$

(52) Cooperative Patent Classification (CPC):
**H04B 10/6165**

(86) International application number:
**PCT/IB2021/053476**

(87) International publication number:
**WO 2021/220163 (04.11.2021 Gazette 2021/44)**

(54) **METHOD AND SYSTEM FOR CORRECTING AND MONITORING PHASE NOISE IN COHERENT OPTICAL MULTI-CARRIER SYSTEMS WITH CHROMATIC DISPERSION**

VERFAHREN UND SYSTEM ZUR KORREKTUR UND ÜBERWACHUNG VON PHASENRAUSCHEN IN KOHÄRENTEN OPTISCHEN MEHRTRÄGERSYSTEMEN MIT CHROMATISCHER DISPERSION

PROCÉDÉ ET SYSTÈME DE CORRECTION ET DE SURVEILLANCE DU BRUIT DE PHASE DANS DES SYSTÈMES OPTIQUES COHÉRENTS MULTIPORTEUSES AVEC DISPERSION CHROMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **27.04.2020   PT 2020116299**

(43) Date of publication of application:
**08.03.2023   Bulletin 2023/10**

(73) Proprietors:
• **Instituto de Telecomunicações**
  **3810-193 Aveiro (PT)**
• **Universidade de Aveiro**
  **3810-193 Aveiro (PT)**

(72) Inventors:
• **NEPOMUCENO PEREIRA MONTEIRO, Paulo Miguel**
  **3800-006 AVEIRO (PT)**
• **DOS SANTOS NEVES, Manuel**
  **3830-291 ÍLHAVO (PT)**

• **PEREIRA GUIOMAR, Fernando Pedro**
  **3830-414 GAFANHA DO CARMO (PT)**

(74) Representative: **Patentree**
**Edifício Net**
**Rua de Salazares, 842**
**4149-002 Porto (PT)**

(56) References cited:
**KR-B1- 102 000 398      US-A1- 2018 269 985**
**US-B2- 8 467 690      US-B2- 10 404 380**

• **NEVES MANUEL S. ET AL: "Chromatic Dispersion-Aware Carrier-Phase Estimation for Digital Subcarrier Multiplexing Systems", 2020 EUROPEAN CONFERENCE ON OPTICAL COMMUNICATIONS (ECOC), 1 December 2020 (2020-12-01), pages 1-4, XP055826752, DOI: 10.1109/ECOC48923.2020.9333181 ISBN: 978-1-7281-7361-0**

**EP 4 145 723 B1**

**Description**

**TECHNICAL FIELD**

The present disclosure concerns the area of optical communications and describes a method for correcting phase noise originated by lasers from coherent optical transmission multi-carrier systems in the optical fiber.

**BACKGROUND**

In phase noise correction methods currently applied in coherent optical multi-carrier systems, the effects caused by the phase noise are corrected as a single one, which introduces a penalty that will be greater the greater the distance the signal propagates.

US8467690B2 describes methods and systems for laser phase noise cancellation combined with chromatic dispersion. One method may include measuring a laser phase noise differential using two optical pilot signals, each pilot signal having a different optical frequency or using an optical carrier and a pilot signal. The method can also include determining an approximate laser phase noise present in an optical system based on the measured laser phase noise differential. The method may further include laser phase noise compensation based on the approximately determined laser phase noise.

US2011020005A1 discloses an optical transmitter for generating a modulated optical signal for transmission over a link of optical fiber to a remote receiver including a laser; a modulator to externally modulate the optical output signal with an RF signal to produce an optical signal including a component containing modulated information; and a phase modulator coupled to the modulator output or directly to the laser output to reduce or cancel the noise signals generated on the laser.

US10404380B2 discloses a compensation apparatus for an offset drift, a received signal recovery apparatus and a receiver, in which estimation and compensation of an offset drift are directly performed at a receiver end, with no need of extra provision of an offset control circuit at a transmitter end, so that the system is simple in structure, applicable to various modulation formats, wide in applicability, and is able to meet demands for high-order modulation formats, and furthermore, by equalizing a received signal and performing phase recovery on a frequency difference and phase noises, information on offset points of a modulator of the transmitter end may be accurately separated, thereby accurately compensating for the offset drift of the modulator of the transmitter end.

US2018269985A1 discloses an apparatus, a system and a method, wherein the apparatus includes an electronic digital signal processor having electrical inputs for receiving a first sequence of measurements of values of a transmitted modulated optical carrier received in a coherent optical receiver and having electrical outputs for a stream of determined transmitted data values demodulated therein from the first sequence. The electronic digital signal processor has first circuitry to determine phase offsets of received pilot values from the first sequence. Additionally, the electronic digital signal processor has second circuitry to correct phase offsets of received ones of the data values from the determined phases of pilot values and data values being temporally interleaved in the transmitted modulated optical carrier.

KR102000398B1 discloses a transmitter, a phase compensator, a transmission method, and a phase compensation method for coherent optical OFDM communication. The total bandwidth allocated in coherent optical OFDM communication is divided into a plurality of predetermined sub-bands, and two sub-carriers adjacent to each other among a plurality of sub-carriers are pre-designated to a sub-carrier in which two pilot signals are to be transmitted from each of the plurality of sub-bands. The two pilot signals of each of the plurality of sub-bands are transmitted to signals having a relation of reciprocal conjugate complex numbers, and two reception pilot signals are obtained to easily estimate phase noise of each of the plurality of sub-bands at high speed.

These facts are described in order to illustrate the technical problem solved by the embodiments of the present document.

**GENERAL DESCRIPTION**

The present disclosure concerns the area of optical communications and describes a method for correcting phase noise originated by lasers from coherent optical transmission multi-carrier systems in the optical fiber. To this end, it takes advantage of the propagation properties of the optical fiber that are normally seen as limitations of the system.

Phase noise correction methods currently applied in coherent optical multi-carrier systems do not take advantage of the recognition of the existence of two separable phase noises, which combined impact each subcarrier differently. The effects are corrected as a single one, which introduces a penalty that will be greater the greater the distance the signal propagates.

In order to increase the performance of the phase estimate and compensation in intradyne coherent optical systems, the present disclosure allows the separation of the phase noises caused by the lasers of the optical transmitter and receiver, taking advantage of the chromatic dispersion properties due to the propagation of the signal in the optical fiber.

One of the objectives of the present disclosure is the correction of the phase noise originated by the lasers of the coherent optical transmission multi-carrier systems in the optical fiber, as well as the estimate of their properties.

The present disclosure allows to increase the efficiency of coherent optical transmission multi-carrier systems that use the optical fiber as a transmission channel, being applicable in digital signal processing units of optical transceivers.

In one embodiment, the present disclosure concerns a method to be integrated into digital signal processing systems of coherent optical receivers that use a multi-carrier system and that use fiber as an optical channel.

Multi-carrier system means a system that, for the transmission of information, divides the bandwidth allocated to the optical channel into two or more subcarriers. Each subcarrier carries independent information, in a given modulation format. The spectral occupation of each subcarrier can be contiguous and equivalent to the spectral occupation of a single-carrier system with the same information transfer rate.

In optical fiber there is a linear phenomenon called chromatic dispersion. This effect makes, for the same optical channel, the different components of the signal, in frequency, to travel at different group speeds. Consequently, the different spectral components of the transmitted signal reach the optical receiver with relative delays that depend exclusively on the dispersion accumulated in the propagation, generating a temporal spreading effect of the signal. Knowing that this transformation is linear, it is possible to apply an inverse transformation that corrects the signal in the domain of time or frequency, recovering the signal again with all the components aligned with each other, as they were sent in the transmitter. In an ideal system, this process would translate into a perfect solution, resulting in an error-free signal reception, regardless of whether it is a single-carrier or multi-carrier system.

In a real system, however, there are noise sources that prevent this correction from being ideally performed, namely, the insertion of phase noise by the lasers of the optical transmitter and receiver, responsible for the generation of the carrier wave and for the consistent information retrieval. This noise insertion is due to the fact that it is impossible to produce lasers that generate a wave with a zero bandwidth, and, as such, fluctuations in the carrier frequency are responsible for the creation of the phase noise.

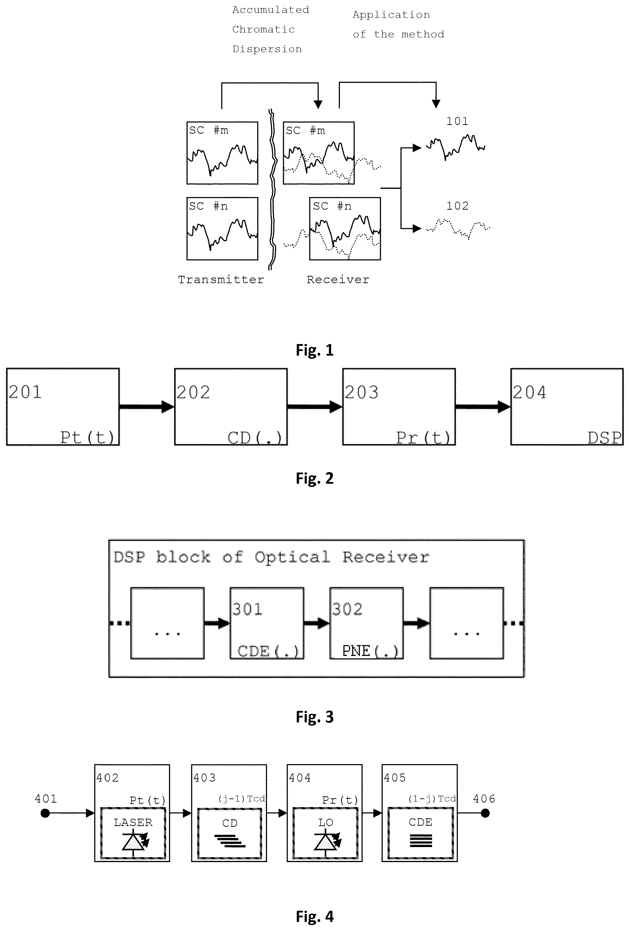

In one embodiment, the diagram in Figure 2 shows the inefficiency of the chromatic dispersion equalization. Block **201** corresponds to the insertion of the phase noise of the transmitting laser, **Pt,** in the signal to be sent, a phenomenon intrinsic to the modulation of the optical signal. In block **202,** the transmission of the optical signal in the optical fiber is represented, and the respective insertion of the chromatic dispersion effect, **CD.** In block **203,** when receiving the optical signal, the phase noise of the receiving laser, **Pr,** is inserted, which, despite affecting equally all frequencies of the signal, these components are misaligned, due to the accumulated dispersion in the fiber. In block **204,** in digital signal processing, **DSP,** the operation opposite to that occurred in block **102** is carried out, which does not foresee that the contribution of the effect inserted in block **203** is not synchronous in all spectral components.

In a preferred embodiment, Figure 3 demonstrates the phase noise estimation, **PNE** in block **302,** performed after the chromatic dispersion equalization, **CDE** in block **301,** this correction must take into account the sum of the effects outlined in Figure 2.

This method demonstrates the possibility of achieving the separation of phase noise effects originated by the laser of the optical transmitter from those originated by the optical receiver. Having these effects separated, it is possible to correct the phase noise in each subcarrier individually, by mixing the contribution of the two effects in the appropriate way. It is also possible to estimate the properties of each of the lasers separately, namely, the contribution of each one of them to the total phase noise.

In one aspect of the present disclosure, the method is divided into four distinct phases:

the first one is the obtention of an estimate of the phase noise of the local oscillator;

the second one, complementary to the first one, is the recognition of the time lag between subcarriers considering the moments of transmission and reception to improve the estimates of both phase noises from the transmitter and the receiver;

the third one is the phase noise correction process;

the fourth one is the process of monitoring the state of the transmitter and receiver lasers.

The listing and sequence of the aforementioned phases merely serves to facilitate the exposure of a possible implementation of the method, so they should not be seen, in their entirety, as mandatory or necessary steps to the method, being, for example, possible to discard the fourth phase without losing the quality of the total phase noise estimate.

The present disclosure relates to a digital signal processing system for phase noise correction in a coherent optical channel multi-carrier optical system for signal transmission, wherein the multi-carrier system comprises a transmitter with a laser to emit two or more subcarriers (SC) and a receiver with a laser to receive said subcarriers (SC);

wherein the optical channel has chromatic dispersion (CD), the laser of the emitter has phase noise (Pt), and the laser of the receiver has phase noise (Pr);

wherein the digital signal processing system comprises an electronic data processor configured to obtain a receiver phase noise estimate (Pr') through the linear combination of the transmitter phase noise and the receiver phase noise, when said linear combination is received at the receiver, by the steps of:

selecting a first subcarrier (Pm) and a second subcarrier (Pn), wherein m and n designate, respectively, the index of the first subcarrier (Pm) and the index of the second subcarrier (Pn);

from said selected subcarriers, obtaining a phase estimate of the first subcarrier (Pm') and a phase estimate of the second subcarrier (Pn');

estimating the receiver phase noise (Pr') by first order integration of the multiplication of **Ts/((n-m)Tcd)** by the difference between the phase estimate of the first subcarrier (Pm') and the phase estimate of the second subcarrier (Pn');

wherein **Ts** is the symbol period and **Ted** time delay between two adjacent subcarriers, imposed by the chromatic dispersion during the signal propagation through the optical channel.

In one embodiment, the electronic data processor is further configured to, from the receiver phase noise estimate (Pr'), obtain an estimate of the transmitter phase noise (Pt') through available subcarrier phase estimates (Pj'), by the steps of:

selecting a plurality of subcarriers (Pj), wherein j designates the index of each subcarrier from the plurality of selected subcarriers;

obtaining a phase estimate of each selected subcarrier (Pj');

for each phase estimate of each selected subcarrier (Pj'), calculating a second phase estimate of each selected subcarrier (Pj") by subtracting from the phase estimate of each selected subcarrier (Pj') the receiver phase noise estimate (Pr') delayed by **(j-1)Tcd/Ts** periods;

estimating the transmitter phase noise (Pt') by the average of the values of the previous step, that is, the average of the second phase noise estimates of each subcarrier (Pj").

In one embodiment, the electronic data processor is further configured to, from the estimate of the transmitter phase noise (Pt'), obtaining a second receiver phase noise estimate (Pr") through the available subcarrier phase estimates (Pj'), by the steps of:

for each selected subcarrier (Pj), calculating a third phase estimate of each selected subcarrier (Pj"), by subtracting from each available subcarrier phase estimate (Pj') the transmitter phase noise estimate (Pt');

obtaining a second receiver phase noise estimate (Pr") by averaging the dimension of j given by:

$$Pr''(k)= S(Pj'''(k + (j-1)Tcd/Ts))/N$$

wherein N is the number of subcarrier phase estimates (Pj') available.

In one embodiment, the electronic data processor is further configured to repeat, iteratively and alternately, the steps of the two previous embodiments in order to successively refine the phase noise estimates of both transmitter and receiver.

In one embodiment, the electronic data processor is further configured to correct the phase noise in each subcarrier by the linear combination of the transmitter phase noise estimate (Pt') and the receiver phase noise estimate (Pr', Pr").

In one embodiment, the electronic data processor is further configured to obtain the linear combination of the transmitter phase noise estimate (Pt') and the receiver phase noise estimate (Pr', Pr") for a given subcarrier (Pi), to compensate for the phase noise in that subcarrier (Pi), by calculating:

$$Pi'(k)=Pt'(k)+Pr'(k-(i-1)Tcd/Ts).$$

In one embodiment, the electronic data processor is further configured to monitor the status of the transmitter laser and the receiver laser by independently monitoring the transmitter phase noise estimate and the receiver phase noise estimate.

In one embodiment, the electronic data processor is further configured to estimate the spectral width of the transmitter laser from the transmitter phase noise estimate.

In one embodiment, the electronic data processor is further configured to estimate the spectral width of the receiver laser from the receiver phase noise estimate.

In one embodiment, Tcd is estimated.

In one embodiment, Tcd is measured.

In one embodiment, the optical channel is optical fiber.

In one embodiment, the transmitted signal is optically modulated in the signal generated by the transmitter laser.

One aspect of the disclosure refers to a method for correcting phase noise in a coherent optical channel multi-carrier optical system for signal transmission, wherein the multi-carrier system comprises an optical transmitter to emit two or more subcarriers (SC) and an optical receiver for receiving said subcarriers (SC);

> wherein the optical channel has chromatic dispersion (CD), the laser of the emitter has phase noise (Pt), and the laser of the receiver has phase noise (Pr);
> wherein the method comprises obtaining a receiver phase noise estimate (Pr') through the linear combination of the transmitter phase noise and the receiver phase noise, when said linear combination is received at the receiver, by the steps of:
>
>> selecting a first subcarrier (Pm) and a second subcarrier (Pn), wherein m and n designate, respectively, the index of the first subcarrier (Pm) and the index of the second subcarrier (Pn);
>> from said selected subcarriers, obtaining a phase estimate of the first subcarrier (Pm') and a phase estimate of the second subcarrier (Pn');
>> estimating the receiver phase noise (Pr') by first order integration of the multiplication of $Ts/((n-m)Tcd)$ by the difference between the phase estimate of the first subcarrier (Pm') and the phase estimate of the second subcarrier (Pn');
>
> wherein **Ts** is the symbol period and **Ted** time delay between two adjacent subcarriers, imposed by the chromatic dispersion during the signal propagation through the optical channel.

In one embodiment, the method comprises, from the receiver phase noise estimate (Pr'), obtaining a transmitter phase noise estimate (Pt') through available subcarrier phase estimates (Pj'), by the steps of:

> selecting a plurality of subcarriers (Pj), wherein j designates the index of each subcarrier from the plurality of selected subcarriers;
> obtaining a phase estimate of each selected subcarrier (Pj');
> for each phase estimate of each selected subcarrier (Pj'), calculating a second phase estimate of each selected subcarrier (Pj") by subtracting from the phase estimate of each selected subcarrier (Pj') the receiver phase noise estimate (Pr') delayed by **(j-1)Tcd/Ts** periods;
> estimating the transmitter phase noise (Pt') by the average of the values of the previous step, that is, the average of the second phase noise estimates of each subcarrier (Pj").

In one embodiment, the method comprises, from the transmitter phase noise estimate (Pt'), obtaining a second receiver phase noise estimate (Pr") through the available subcarrier phase estimates (Pj') by the steps of:

> for each selected subcarrier (Pj), calculating a third phase estimate of each selected subcarrier (Pj"), by subtracting from each available subcarrier phase estimate (Pj') the transmitter phase noise estimate (Pt');
> obtaining a second receiver phase noise estimate (Pr") by averaging the dimension of **j** given by:

$$Pr''(k)= S(Pj'''(k + (j-1)Tcd/Ts))/N$$

> wherein N is the number of subcarrier phase estimates (Pj') available.

In one embodiment, the method comprises repeating, iteratively and alternately, the steps of the two previous embodiments in order to successfully refine the phase noise estimates of both transmitter and receiver.

In one embodiment, the electronic data processor is further configured to correct the phase noise in each subcarrier by the linear combination of the transmitter phase noise estimate (Pt') and the receiver phase noise estimate (Pr', Pr").

In one embodiment, the electronic data processor is further configured to obtain the linear combination of the transmitter phase noise estimate (Pt') and the receiver phase noise estimate (Pr', Pr") for a given subcarrier (Pi), to compensate for the phase noise in that subcarrier (Pi), by calculating:

$$Pi'(k)=Pt'(k)+Pr'(k-(i-1)Tcd/Ts).$$

Another aspect of the disclosure concerns a non-transitory data storage means comprising computer programming instructions for implementing a digital signal processing system for phase noise correction in a coherent optical channel multi-carrier optical system for signal transmission, the computer programming instructions including instructions that, when run by a processor, cause the processor to perform the method - described earlier.

## BRIEF DESCRIPTION OF THE DRAWINGS

For an easier understanding, figures are herein attached, which represent preferred embodiments which are not intended to limit the object of the present description.

**Figure 1:** Schematic representation of an embodiment of the method presented.

**Figure 2:** Schematic representation of an embodiment of the method representing the effects to be considered in the estimate of phase noise.

**Figure 3:** Schematic representation of an embodiment of the method developed representing relevant processes within the digital signal processor.

**Figure 4:** Schematic representation of an embodiment of the method developed showing the sum of effects to which a subcarrier is subject.

**Figure 5:** Schematic representation of a diagram demonstrating Phase 1 of an embodiment of the method developed.

**Figure 6:** Schematic representation of a diagram of the optical transmitter of the multi-carrier system of a preferred embodiment.

**Figure 7:** Schematic representation of a diagram of the optical receiver of the multi-carrier system of a preferred embodiment.

**Figure 8:** Schematic representation of a diagram of the digital signal processor of the optical receiver of a preferred embodiment.

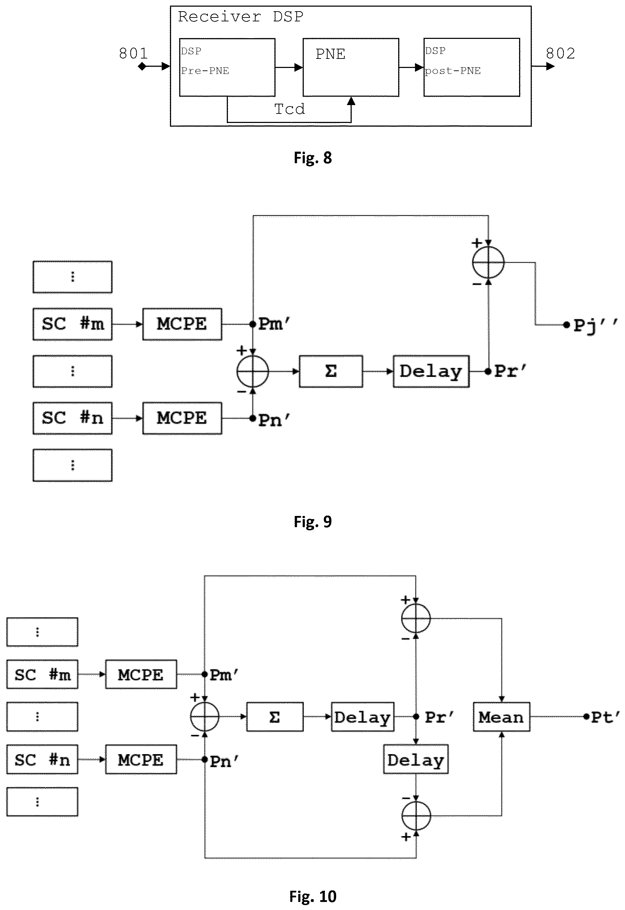

**Figure 9:** Schematic representation of an embodiment of the present disclosure. The figure comprises extracting the phase noise estimate from two subcarriers, SC, and obtaining Pr' and Pj", using integration, delay and average operations for this purpose. The MCPE blocks (modulated carrier phase estimation) correspond to the operation described in paragraph [0065]. Subtracting Pn' from Pm' is the operation described in paragraph [0066]. The block represented by the Greek letter Sigma represents the integration and multiplication by a constant present in paragraph [0070]. The delay block is a delay also imposed by the integration of paragraph [0070]. Subtracting Pr' from Pm' is the operation described in paragraph [0074].

**Figure 10:** Schematic representation of an embodiment of the present disclosure. The figure comprises the extension of the schematic representation of Figure 9 to obtain estimates of the phase noise Pr' and Pt', using delay and average operations for this purpose. The delay block corresponds to the operation described in paragraph [0074]. The mean block corresponds to the operation described in paragraph [0075].

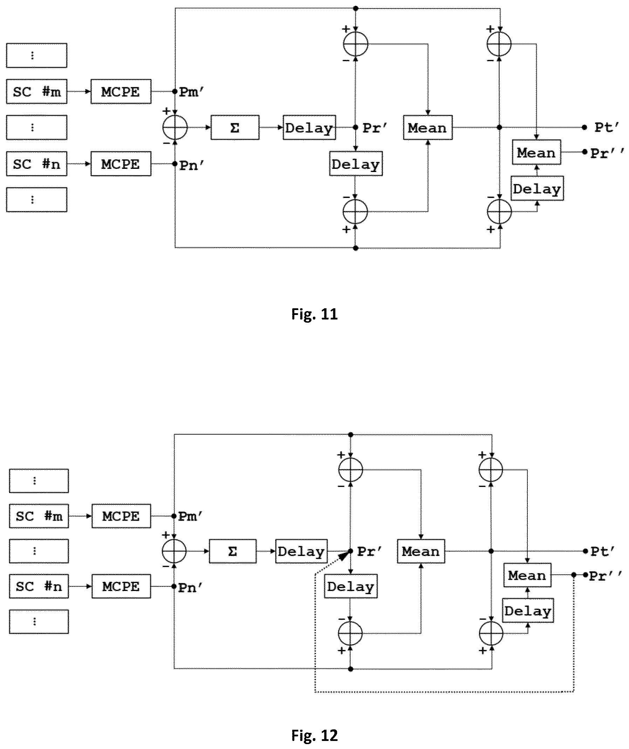

**Figure 11:** Schematic representation of an embodiment of the present disclosure. The figure comprises the extension of the schematic representation of Figure 10 to obtain estimates of the Pt' and Pr" phase noises, using delay and average operations for this purpose. The delay and mean blocks correspond to the operation described in paragraph

[0078].

**Figure 12:** Schematic representation of an embodiment of the present disclosure. The figure comprises the extension of the schematic representation of Figure 11 for an iterative obtention of the phase noise estimates Pr' and Pj", operation described in paragraph [0079].

## DETAILED DESCRIPTION

The present disclosure relates to the area of optical communications and describes a method for correcting the phase noise originated by the lasers of the coherent optical transmission multi-carrier systems in the optical fiber, also adding the ability to monitor the status of each of the lasers individually. To this end, it takes advantage of the propagation properties of the optical fiber that are normally seen as limitations of the system.

The application of the present disclosure is intended namely for coherent optical transceivers with support for multi-carrier modulation.

Next, the embodiments of each of the four phases mentioned above will be presented.

In one embodiment, Figure 1 illustrates the basis of the method developed. At the transmitter, the subcarriers, SC, are affected by a phase noise, 101. At the receiver, after suffering the effects of the chromatic dispersion of the fiber, the subcarriers are affected by a second phase noise, 102, each at different time points. The presented method is able to separate the effects and use them to correct the phase noise and estimate the properties of each noise.

It is also described how to obtain an estimate of the phase noise of the local oscillator. Considering a single-subcarrier and the effects to which it is subject, see Figure 4. Initially, the signal to be transmitted in the digital domain, **401,** is generated. By modulating this signal in the optical domain, the phase noise of the transmitting laser, **402** is inserted. During propagation, a time lag, **403,** is inserted due to the effect of chromatic dispersion **(CD).** Note at this point that the assumption that chromatic dispersion can be considered as a mere delay between subcarriers, in a multi-carrier system, is implicit. At the reception, the phase noise of the local oscillator **(LO)** laser of the optical receiver, **404** is added. After passing the signal to the digital domain, in the chromatic dispersion equalization **(CDE)** or any equivalent compensation, **405,** the time lag inserted in **403** is corrected, finally obtaining **406,** the subcarrier **#j** whose phase noise is a linear combination of **Pt** and **Pr.**

It should be noted that the use of subcarriers with reduced spectral width makes it possible to approximate the impact of chromatic dispersion to a time delay.

In one embodiment, the method comprises a plurality of subcarriers, in particular three or more frequencies.

In one embodiment, the three frequencies of the plurality of subcarriers are uniformly separated.

In an alternative embodiment, the frequencies of the plurality of subcarriers are not uniformly separated.

Based on the premise that the effect of chromatic dispersion can be described as a time delay between sub-carriers, and since what is at stake are relative time deviations, we can consider for this purpose that subcarrier **#1** is the one that contains time-aligned **Pr.**

In this notation, **Ted** represents the time delay between two adjacent subcarriers, imposed by the chromatic dispersion during the signal propagation in the optical fiber. Although its theoretical value can be easily calculated as a function of the propagation properties and of the length of the fiber and of the spectral properties of the subcarriers, in a practical system it is possible to obtain, with greater accuracy, the **Ted** value of the blocks of the reception system predecessors to the block responsible for the estimate of the phase noise, for example the blocks of the digital signal processor.

Now taking any two subcarriers, **#m** and **#n,** from a multi-carrier system that is subject to the effect of chromatic dispersion and considering for the purpose that they have present phase noises from the non-negligible transmitter and receiver lasers, it is possible to describe the phase noise that they feel, **Pm** and **Pn,** as a linear combination of the effects of the transmitter, **Pt,** and the receiver, **Pr,** phase noises:

$$Pm(t)=Pt(t)+Pr(t-(m-1)Tcd)$$

$$Pn(t)=Pt(t)+Pr(t-(n-1)Tcd)$$

Then taking the phase estimates, **Pm'** and **Pn',** which can be obtained using any phase estimate method of the subcarriers **#m** and **#n** of the multi-carrier system, considered for the purpose reference subcarriers for the correction of phase noise and consequently having good estimates thereof, these can be represented in the digital domain, considering a period of symbol Ts, as follows:

$$Pm'(k)=Pt(k\ Ts)+Pr(k\ Ts-(m-1)Tcd)$$

$$Pn'(k)=Pt(k\ Ts)+Pr(k\ Ts-(n-1)Tcd)$$

By subtracting **Pn'** from **Pm'** one obtains:

$$Pm'(k)-Pn'(k)=Pr(k\ Ts-(m-1)Tcd)-Pr(k\ Ts-(n-1)Tcd)$$

Which corresponds to the evolution of **Pr** in the time interval (n-m) Tcd. Then there is the evolution of **Pr** and the time interval in which the evolution took place.

Now considering, finally, the regeneration of the signal **Pr,** let us take as a starting point the formulation of the first order discrete integration of a discrete signal **F:**

$$F(k)=S(F(j)-F(j-1))+F(0)$$

Wherein **S(.)** represents the sum in j, with j=[1,k]. Therefore, to recover an estimate of **Pr,** in the discrete domain, **Pr',** it is necessary to have an approximation of the evolution of **Pr** in each period **Ts.** The approximation can be obtained according to:

$$Pr'(j)-Pr'(j-1)=(Pr(j\ Ts)-Pr(j\ Ts-(n-m)Tcd))Ts/((n-m)Tcd)$$

$$=(Pm'(j)-Pn'(j))\ Ts/((n-m)Tcd)$$

**J** being able to take on any non-zero natural value. Then applying the first order discrete integration, one obtains:

$$Pr'(k)=S(Pm'(j)-Pn'(j))\ Ts/((n-m)Tcd)$$

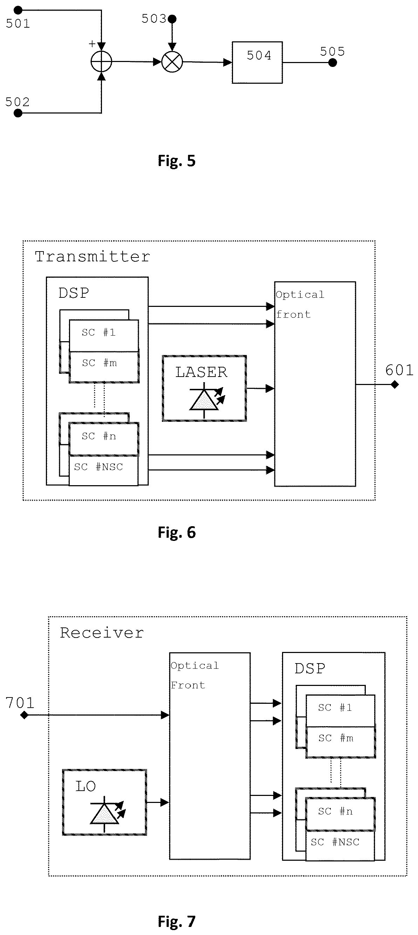

This concludes a possible implementation of the first phase of the described phase estimate method, which allows to obtain an estimate of the phase noise of the local oscillator. In an embodiment of the scheme of the steps previously described can be seen in Figure 5, wherein reference numbers **501** and **502** represent **Pm'** and **Pn',** respectively, reference number **503** corresponds to the multiplicative constant **Ts/((n-m)Tcd),** block **504** corresponds to the first order integration operation and reference number **505** corresponds to the receiver phase noise estimate, **Pr'.**

The improvement of the estimates of both transmitter and receiver phase noises is also described. In the previous phase, an estimate for **Pr** was obtained. In this phase, a method is presented to obtain an initial estimate for **Pt,** starting from **Pr,** and an approach to iteratively improve these two estimates.

Having **Pr',** and knowing that the phase estimate of each subcarrier **#j** is affected by a lagged version of **Pr,** a phase estimate in that subcarrier will have measured the following linear combination of **Pt** and **Pr,** as was already possible from observing Figure 4.

$$Pj'(k)=Pt(k\ Ts)+Pr(k\ Ts-(j-1)Tcd)$$

Then, considering:

$$Pj''(k)=Pj'(k)-Pr'(k+(j-1)Tcd/Ts)$$

$$=Pt(k\ Ts)$$

From here it is possible to verify that each phase estimate **Pj',** after subtracting the contribution from **Pr,** using the estimate **Pr',** gives rise to a valid estimate for **Pt, Pj".** Additionally, by averaging the various **Pj"** in the dimension of **j,** it is possible to obtain a transmitter phase noise estimate, **Pt'.**

$$Pt'(k)=S(Pj''(k))/N$$

With **N** being the total number of subcarriers for which there is a phase estimate.

Similarly, it is possible to improve the estimate of **Pr'** using the **Pt'** estimate, by doing:

$$Pj'''(k)=Pj'(k)-Pt'(k)$$

$$=Pr(k\,Ts - (j-1)Tcd)$$

From here it is possible to verify that each phase estimate Pj' gives rise to a valid estimate for **Pr**, time-lagged, **Pj'''**. By averaging the various **Pj'''** in the dimension of **j**, with the appropriate time lag, it is possible to obtain an improved receiver phase noise estimate, **Pr''**.

$$Pr''(k)= S(Pj'''(k + (j-1)Tcd/Ts))/N$$

The two procedures described above can (but need not necessarily) be repeated iteratively to refine the estimates of **Pt** and **Pr**.

A phase noise correction process is also described. Having obtained estimates for **Pt** and **Pr**, and having knowledge of the phase noise that affects each of the subcarriers, the phase correction can result from linearly combining these two estimates to reconstruct the phase noise that affects each subcarrier **i, Pi'**, as follows:

$$Pi'(k)=Pt'(k)+Pr'(k-(i-1)Tcd/Ts)$$

Finally, the application of phase correction can result from the multiplication of subcarrier **i** by the exponential raised to the product of the imaginary number by the symmetric of **Pi'**.

A process for monitoring the status of the transmitter and receiver lasers is also described. With separate estimates of the lasers, it is possible to estimate separately the impact of each one of them in the total phase noise, consequently managing to characterize the spectral width of each one, as a function of the symbol period, as well as the impact that each of the lasers has for the totality of the phase noise present in each subcarrier.

The estimate of the spectral width is based on the mathematical model of the phase noise, which models it as a Wiener process, a cumulative sum of Gaussian variables whose variance is given by twice the pi multiplied by the product of the spectral width of the laser by the symbol period. By performing the inverse operation, starting from the laser phase noise estimates, and knowing the symbol period, it is thus possible to obtain an estimated value of the spectral width of the laser.

Some application examples are described:

What is considered to have industrial application is preferably the method as a whole and the application thereof in digital signal processing units of the coherent optical receiver of multi-carrier systems, as can be seen in Figure 3, in order to obtain the maximum efficiency of its optical systems.

In order to illustrate a possible scenario, although not restricted to, where the method herein presented has application, Figures 6 to 8 are shown below.

In one embodiment, Figure 6 represents a simplified diagram of the optical transmitter, where the block of the digital signal processor, **DSP,** stands out, wherein the various subcarriers to multiplex in the frequency domain are shown, two any subcarriers are highlighted, **#m** and **#n,** those selected as reference subcarriers.

Also noteworthy are the laser, a necessary element for optical transmission, but a generator of phase noise **Pt,** and the optical signal ready to be transmitted in the optical fiber, **601.**

In one embodiment, Figure 7 represents a simplified diagram of the optical receiver, wherein the optical signal stands out after being transmitted in the optical fiber with the accumulated effect of chromatic dispersion, **701,** the local oscillator, a necessary element for the coherent system, but generator of the phase noise **Pr** and, finally, similarly to the transmitter, the digital signal processor block, DSP, where the various subcarriers are located and the same two subcarriers highlighted, **#m** and **#n,** used in this block for the implementation of the method.

In one embodiment, Figure 8 presents a diagram of the receiver's digital signal processor, where three moments are defined, the **pre-PNE** moment, before the phase noise estimate, the **PNE** moment, where the implementation of the herein presented method takes place, and the **post-PNE** moment. We see how it is in the **pre-PNE** moment that the **Ted** value is estimated and this value is used for the implementation of the method in the **PNE** block. Signals **801** and **802** are the signal, already in the digital domain, before digital compensation and the received bit stream, after demodulation and decoding, respectively.

The term "comprises" or "comprising" when used herein is intended to indicate the presence of the features, elements, integers, steps and components mentioned, but does not preclude the presence or addition of one or more other features, elements, integers, steps and components, or groups thereof.

The present invention is of course in no way restricted to the embodiments described herein and a person of ordinary skill in the art can foresee many possibilities of modifying it and replacing technical features with equivalents depending on the requirements of each situation as defined in the appended claims.

The following claims define additional embodiments of the present description.

**Claims**

1. Digital signal processing system for phase noise correction in a coherent optical channel multi-carrier optical system for signal transmission, wherein the multi-carrier system comprises a transmitter with a laser to emit two or more subcarriers (SC) and a receiver with a laser to receive said subcarriers (SC);

   wherein the optical channel has chromatic dispersion (CD), the laser of the emitter has phase noise (Pt), and the laser of the receiver has phase noise (Pr);
   wherein the digital signal processing system comprises an electronic data processor configured to obtain a receiver phase noise estimate (Pr') through the linear combination of the transmitter phase noise and the receiver phase noise, when said linear combination is received at the receiver, by the steps of:

   selecting a first subcarrier (Pm) and a second subcarrier (Pn), wherein m and n designate, respectively, the index of the first subcarrier (Pm) and the index of the second subcarrier (Pn);
   from said selected subcarriers, obtaining a phase estimate of the first subcarrier (Pm') and a phase estimate of the second subcarrier (Pn');

   **characterized in that** the calculation of the linear combination of the transmitter phase noise and the receiver phase noise to obtain the receiver phase noise estimate (Pr') comprise the step of estimating the receiver phase noise (Pr') by first order integration of the multiplication of **Ts/((n-m)Tcd)** by the difference between the phase estimate of the first subcarrier (Pm') and the phase estimate of the second subcarrier (Pn');
   wherein **Ts** is the symbol period and **Tcd** the time delay between two adjacent subcarriers, imposed by the chromatic dispersion during the signal propagation through the optical channel.

2. System according to the preceding claim, wherein the electronic data processor is further configured to, from the receiver phase noise estimate (Pr'), obtain a transmitter phase noise estimate (Pt') through available subcarrier phase estimates (Pj'), by the steps of:

   selecting a plurality of subcarriers (Pj), wherein j designates the index of each subcarrier from the plurality of selected subcarriers;
   obtaining a phase estimate of each selected subcarrier (Pj');
   for each phase estimate of each selected subcarrier (Pj'), calculating a second phase estimate of each selected subcarrier (Pj") by subtracting from the phase estimate of each selected subcarrier (Pj') the receiver phase noise estimate (Pr') delayed by **(j-1)Tcd/Ts** periods;
   estimating the transmitter phase noise (Pt') by the average of the values of the previous step, that is, the average of the second phase noise estimates of each subcarrier (Pj").

3. System according to the preceding claim, wherein the electronic data processor is further configured to, from the transmitter phase noise estimate (Pt'), obtain a second receiver phase noise estimate (Pr") through the phase estimates of available subcarriers (Pj'), by the steps of:

   for each selected subcarrier (Pj), calculating a third phase estimate of each selected subcarrier (Pj"), by subtracting from each available subcarrier phase estimate (Pj') the transmitter phase noise estimate (Pt');
   obtaining a second receiver phase noise estimate (Pr") by averaging the dimension of j given by:

$$Pr''(k)= S(Pj'''(k + (j-1)Tcd/Ts))/N$$

wherein N is the number of subcarrier phase estimates (Pj') available.

4. System according to claims 2 and 3, wherein the electronic data processor is further configured to iteratively and alternately repeat the steps of claims 2 and 3 to successively refine the phase noise estimates of the transmitter and receiver.

5. System according to any one of claims 2 - 4, wherein the electronic data processor is further configured to correct the phase noise in each subcarrier by the linear combination of the transmitter phase noise estimate (Pt') and the receiver phase noise estimate (Pr', Pr").

6. System according to any one of claims 2 - 5, wherein the electronic data processor is further configured to obtain the linear combination of the transmitter phase noise estimate (Pt') and the receiver phase noise estimate (Pr', Pr") for a given subcarrier (Pi), to compensate for the phase noise in that subcarrier (Pi), by calculating:

$$Pi'(k)=Pt'(k)+Pr'(k-(i-1)Tcd/Ts).$$

7. System according to any one of claims 2 - 6, wherein the electronic data processor is further configured to monitor the status of the transmitter laser and the receiver laser by independently monitoring the transmitter phase noise estimate and the receiver phase noise estimate.

8. System according to any one of the preceding claims wherein the transmitted signal is optically modulated in the signal generated by the transmitter laser.

9. Method for correcting phase noise in a coherent optical channel multi-carrier optical system for signal transmission, wherein the multi-carrier system comprises an optical transmitter to emit two or more subcarriers (SC) and an optical receiver for receiving said subcarriers (SC);

   wherein the optical channel has chromatic dispersion (CD), the laser of the emitter has phase noise (Pt), and the laser of the receiver has phase noise (Pr);
   **characterized in that** the method comprises obtaining a receiver phase noise estimate (Pr') through the linear combination of the transmitter phase noise and the receiver phase noise, when said linear combination is received at the receiver, by the steps of:

      selecting a first subcarrier (Pm) and a second subcarrier (Pn), wherein m and n designate, respectively, the index of the first subcarrier (Pm) and the index of the second subcarrier (Pn);
      from said selected subcarriers, obtaining a phase estimate of the first subcarrier (Pm') and a phase estimate of the second subcarrier (Pn');
      estimating the receiver phase noise (Pr') by first order integration of the multiplication of **Ts/((n-m)Tcd)** by the difference between the phase estimate of the first subcarrier (Pm') and the phase estimate of the second subcarrier (Pn');

   wherein Ts is the symbol period and Ted time delay between two adjacent subcarriers, imposed by the chromatic dispersion during the signal propagation through the optical channel.

10. Method according to the preceding claim, wherein the method comprises, from the receiver phase noise estimate (Pr'), obtaining a transmitter phase noise estimate (Pt') through available subcarrier phase estimates (Pj'), by the steps of:

      selecting a plurality of subcarriers (Pj), wherein j designates the index of each subcarrier from the plurality of selected subcarriers;
      obtaining a phase estimate of each selected subcarrier (Pj');
      for each phase estimate of each selected subcarrier (Pj'), calculating a second phase estimate of each selected subcarrier (Pj") by subtracting from the phase estimate of each selected subcarrier (Pj') the receiver phase noise estimate (Pr') delayed by **(j-1)Tcd/Ts** periods;
      estimating the transmitter phase noise (Pt') by the average of the values of the previous step, that is, the average of the second phase noise estimates of each subcarrier (Pj").

**11.** Method according to the preceding claim, wherein the method comprises, from the transmitter phase noise estimate (Pt'), obtaining a second receiver phase noise estimate (Pr") through the available subcarrier phase estimates (Pj'), by the steps of:

for each selected subcarrier (Pj), calculating a third phase estimate of each selected subcarrier (Pj"), by subtracting from each available subcarrier phase estimate (Pj') the transmitter phase noise estimate (Pt');
obtaining a second receiver phase noise estimate (Pr") by averaging the dimension of **j** given by:

$$Pr''(k)= S(Pj'''(k + (j-1)Tcd/Ts))/N$$

wherein N is the number of subcarrier phase estimates (Pj') available.

**12.** Method according to claims 10 and 11, comprising iteratively and alternately repeating the steps of claims 10 and 11 to successively refine the phase noise estimates of the transmitter and receiver.

**13.** Method according to any one of claims 10 - 12, wherein the method further comprises the step of correcting the phase noise in each subcarrier by the linear combination of the transmitter phase noise estimate (Pt') and the receiver phase noise estimate (Pr', Pr").

**14.** Method according to any one of claims 10-13, wherein the method further comprises the step of obtaining the linear combination of the transmitter phase noise estimate (Pt') and the receiver phase noise estimate (Pr', Pr") for a given subcarrier (Pi), to compensate for the phase noise in that subcarrier (Pi), by calculating:

$$Pi'(k)=Pt'(k)+Pr'(k-(i-1)Tcd/Ts).$$

**15.** Non-transitory data storage means comprising computer programming instructions for implementing a digital signal processing system for phase noise correction in a coherent optical channel multi-carrier optical system for signal transmission, the computer programming instructions including instructions that, when run by a processor, cause the processor to perform the method according to any one of claims 9 - 14.

**Patentansprüche**

**1.** Digitales System zur Signalverarbeitung zur Korrektur von Phasenrauschen in einem kohärenten optischen Mehrträgersystem zur Signalübertragung, wobei das Mehrträgersystem einen Sender mit einem Laser zum Senden von zwei oder mehr Unterträgern (SC) und einen Empfänger mit einem Laser zum Empfangen der genannten Unterträger (SC) umfasst;

wobei der optische Kanal eine chromatische Dispersion (CD), der Laser des Senders ein Phasenrauschen (Pt) und der Laser des Empfängers ein Phasenrauschen (Pr) aufweist;
wobei das digitale System zur Signalverarbeitung einen elektronischen Datenprozessor umfasst, der so konfiguriert ist, dass er durch die folgenden Schritte eine Schätzung des Phasenrauschens des Empfängers (Pr') durch die Linearkombination des Phasenrauschens des Senders und des Phasenrauschens des Empfängers gewinnt, wenn die genannte Linearkombination am Empfänger empfangen wird:

Auswählen eines ersten Unterträgers (Pm) und eines zweiten Unterträgers (Pn), wobei m und n jeweils den Index des ersten Unterträgers (Pm) und den Index des zweiten Unterträgers (Pn) bezeichnen;
Gewinnen einer Phasenschätzung des ersten Unterträgers (Pm') und einer Phasenschätzung des zweiten Unterträgers (Pn') aus den genannten ausgewählten Unterträgern;

**dadurch gekennzeichnet, dass** die Berechnung der Linearkombination des Phasenrauschens des Senders und des Phasenrauschens des Empfängers zur Gewinnung der Schätzung des Phasenrauschens des Empfängers (Pr') den Schritt des Schätzens des Phasenrauschens des Empfängers (Pr') durch Integration erster Ordnung der Multiplikation von **Ts/((n-m)Tcd)** mit der Differenz zwischen der Phasenschätzung des ersten Unterträgers (Pm') und der Phasenschätzung des zweiten Unterträgers (Pn') umfasst;
wobei **Ts** die Symbolperiode und **Tcd** die Zeitverzögerung zwischen zwei benachbarten Unterträgern ist, die durch die chromatische Dispersion während der Signalausbreitung durch den optischen Kanal vorgegeben wird.

2. System nach dem vorangehenden Anspruch, wobei der elektronische Datenprozessor ferner so konfiguriert ist, dass er durch die folgenden Schritte aus der Schätzung des Phasenrauschens des Empfängers (Pr') eine Schätzung des Phasenrauschens des Senders (Pt') durch verfügbare Phasenschätzungen des Unterträgers (Pj') gewinnt:

Auswählen einer Vielzahl von Unterträgern (Pj), wobei j den Index jedes Unterträgers aus der Vielzahl der ausgewählten Unterträger bezeichnet;
Gewinnen einer Phasenschätzung für jeden ausgewählten Unterträger (Pj');
Berechnen einer zweiten Phasenschätzung jedes ausgewählten Unterträgers (Pj") für jede Phasenschätzung jedes ausgewählten Unterträgers (Pj') durch Subtrahieren der um (j-1)TedjTs-Perioden verzögerten Schätzung des Phasenrauschens des Empfängers (Pr') von der Phasenschätzung jedes ausgewählten Unterträgers (Pj');
Schätzen des Phasenrauschens des Senders (Pt') durch den Mittelwert der Werte des vorangehenden Schritts, das heißt, den Mittelwert der zweiten Schätzungen des Phasenrauschens jedes Unterträgers (Pj").

3. System nach dem vorangehenden Anspruch, wobei der elektronische Datenprozessor ferner so konfiguriert ist, dass er durch die folgenden Schritte aus der Schätzung des Phasenrauschens des Senders (Pt') eine zweite Schätzung des Phasenrauschen des Empfängers (Pr") durch die Phasenschätzungen der verfügbaren Unterträger (Pj') gewinnt:

Berechnen einer dritten Phasenschätzung jedes ausgewählten Unterträgers (Pj") für jeden ausgewählten Unterträger (Pj), durch Subtrahieren der Schätzung des Phasenrauschens des Senders (Pt') von jeder verfügbaren Phasenschätzung der Unterträger (Pj');
Gewinnen einer zweite Schätzung des Phasenrauschens des Empfängers (Pr") durch Mitteln der Größe von j, gegeben durch:

$$Pr''(k) = S(Pj'''(k + (j-1)Tcd/Ts))/N$$

wobei N die Anzahl der verfügbaren Phasenschätzungen der Unterträger (Pj') ist.

4. System nach Anspruch 2 und 3, wobei der elektronische Datenprozessor ferner so konfiguriert ist, dass er die Schritte nach Anspruch 2 und 3 iterativ und abwechselnd wiederholt, um die Schätzung des Phasenrauschens des Senders und des Empfängers schrittweise zu verfeinern.

5. System nach einem der Ansprüche 2 - 4, wobei der elektronische Datenprozessor ferner so konfiguriert ist, dass er das Phasenrauschen in jedem Unterträger durch die Linearkombination der Schätzung des Phasenrauschens des Senders (Pt') und der Schätzung des Phasenrauschens des Empfängers (Pr', Pr") korrigiert.

6. System nach einem der Ansprüche 2 - 5, wobei der elektronische Datenprozessor ferner so konfiguriert ist, dass er die Linearkombination aus der Schätzung des Phasenrauschens des Senders (Pt') und der Schätzung des Phasenrauschens des Empfängers (Pr', Pr") für einen gegebenen Unterträger (Pi) gewinnt, um das Phasenrauschen in diesem Unterträger (Pi) durch folgende Berechnung auszugleichen:

$$Pi'(k) = Pt'(k) + Pr'(k - (i-1)Tcd/Ts).$$

7. System nach einem der Ansprüche 2 - 6, wobei der elektronische Datenprozessor ferner so konfiguriert ist, dass er den Status des Lasers des Senders und des Lasers des Empfängers überwacht, indem er die Schätzung des Phasenrauschens des Senders und die Schätzung des Phasenrauschens des Empfängers unabhängig voneinander überwacht.

8. System nach einem der vorangehenden Ansprüche, bei dem das gesendete Signal in dem von dem Laser des Senders erzeugten Signal optisch moduliert ist.

9. Verfahren zur Korrektur von Phasenrauschen in einem optischen Mehrträgersystem mit kohärentem Kanal zur Signalübertragung, wobei das Mehrträgersystem einen optischen Sender zum Senden von zwei oder mehr Unterträgern (SC) und einen optischen Empfänger zum Empfangen der genannten Unterträger (SC) umfasst;

wobei der optische Kanal eine chromatische Dispersion (CD), der Laser des Senders ein Phasenrauschen (Pt) und der Laser des Empfängers ein Phasenrauschen (Pr) aufweist;

**dadurch gekennzeichnet, dass** das Verfahren das Erhalten einer Schätzung des Phasenrauschens des Empfängers (Pr') durch die Linearkombination des Phasenrauschens des Senders und des Phasenrauschens des Empfängers umfasst, wenn die genannte Linearkombination am Empfänger durch die folgenden Schritte empfangen wird:

Auswählen eines ersten Unterträgers (Pm) und eines zweiten Unterträgers (Pn), wobei m und n jeweils den Index des ersten Unterträgers (Pm) und den Index des zweiten Unterträgers (Pn) bezeichnen;

Gewinnen einer Phasenschätzung des ersten Unterträgers (Pm') und einer Phasenschätzung des zweiten Unterträgers (Pn') aus den genannten ausgewählten Unterträgern;

Schätzen des Phasenrauschens des Empfängers (Pr') durch Integration erster Ordnung der Multiplikation von **Ts/((n-m)Tcd)** mit der Differenz zwischen der Phasenschätzung des ersten Unterträgers (Pm') und der Phasenschätzung des zweiten Unterträgers (Pn');

wobei **Ts** die Symbolperiode und **Tcd** die Zeitverzögerung zwischen zwei benachbarten Unterträgern ist, die durch die chromatische Dispersion während der Signalausbreitung durch den optischen Kanal vorgegeben wird.

10. Verfahren nach dem vorangehenden Anspruch, wobei das Verfahren das Gewinnen einer Schätzung des Phasenrauschens des Senders (Pt') aus verfügbaren Phasenschätzungen des Unterträgers (Pj') aus Schätzung des Phasenrauschens des Empfängers (Pr') unter Verwendung der folgenden Schritte umfasst:

Auswählen einer Vielzahl von Unterträgern (Pj), wobei j den Index jedes Unterträgers aus der Vielzahl der ausgewählten Unterträger bezeichnet;

Gewinnen einer Phasenschätzung für jeden ausgewählten Unterträger (Pj');

Berechnen einer zweiten Phasenschätzung jedes ausgewählten Unterträgers (Pj") für jede Phasenschätzung jedes ausgewählten Unterträgers (Pj') durch Subtrahieren der um **(j-1)TedjTs**-Perioden verzögerten Schätzung des Phasenrauschens des Empfängers (Pr') von der Phasenschätzung jedes ausgewählten Unterträgers (Pj');

Schätzen des Phasenrauschens des Senders (Pt') durch den Mittelwert der Werte des vorangehenden Schritts, das heißt, den Mittelwert der zweiten Schätzungen des Phasenrauschens jedes Unterträgers (Pj").

11. Verfahren nach dem vorangehenden Anspruch, wobei das Verfahren das Gewinnen einer zweiten Schätzung des Phasenrauschens des Empfängers (Pr") aus verfügbaren Phasenschätzungen der Unterträger (Pj') aus Schätzung des Phasenrauschens des Empfängers (Pt') unter Verwendung der folgenden Schritte umfasst:

Berechnen einer dritten Phasenschätzung jedes ausgewählten Unterträgers (Pj") für jeden ausgewählten Unterträger (Pj), durch Subtrahieren der Schätzung des Phasenrauschens des Senders (Pt') von jeder verfügbaren Phasenschätzung der Unterträger (Pj');

Gewinnen einer zweite Schätzung des Phasenrauschens des Empfängers (Pr") durch Mitteln der Größe von j, gegeben durch:

$$Pr''(k)= S(Pj'''(k + (j-1)Tcd/Ts))/N$$

wobei N die Anzahl der verfügbaren Phasenschätzungen der Unterträger (Pj') ist.

12. Verfahren nach den Ansprüchen 10 und 11, umfassend die iterative und abwechselnde Wiederholung der Schritte nach Anspruch 10 und 11, um die Schätzung des Phasenrauschens des Senders und des Empfängers schrittweise zu verfeinern.

13. Verfahren nach einem der Ansprüche 10 - 12, wobei das Verfahren ferner den Schritt des Korrigierens des Phasenrauschens in jedem Unterträger durch die Linearkombination der Schätzung des Phasenrauschens des Senders (Pt') und der Schätzung des Phasenrauschens des Empfängers (Pr', Pr") umfasst.

14. Verfahren nach einem der Ansprüche 10-13, wobei das Verfahren ferner den Schritt des Gewinnens der Linearkombination aus der Schätzung des Phasenrauschens des Senders (Pt') und der Schätzung des Phasenrauschens des Empfängers (Pr', Pr") für einen gegebenen Unterträger (Pi) umfasst, um das Phasenrauschen in diesem Unterträger (Pi) durch folgende Berechnung auszugleichen:

$$Pi'(k)=Pt'(k)+Pr'(k-(i-1)Tcd/Ts).$$

15. Nichtflüchtiges Speichermedium, umfassend Programmanweisungen für einen Computer zur Implementierung eines digitalen Systems zur Signalverarbeitung zur Korrektur von Phasenrauschen in einem kohärenten optischen Mehrträgersystem zur Signalübertragung, wobei die Programmanweisungen für den Computer Anweisungen enthalten, die, wenn sie von einem Prozessor ausgeführt werden, den Prozessor veranlassen, das Verfahren nach einem der Ansprüche 9 - 14 auszuführen.

**Revendications**

1. Système de traitement de signal digital pour la correction de bruit de phase dans un système optique multiporteur à canal optique cohérent pour la transmission de signal, dans lequel le système multiporteur comprend un émetteur avec un laser pour émettre deux ou plus de sous-porteurs (SC) et un récepteur avec un laser pour recevoir lesdits sous-porteurs (SC) ;

   dans lequel le canal optique a une dispersion chromatique (CD), le laser de l'émetteur a un bruit de phase (Pt), et le laser du récepteur a un bruit de phase (Pr) ;
   dans lequel le système de traitement de signal digital comprend un traiteur de données électronique configuré pour obtenir une estimation de bruit de phase récepteur (Pr') à travers la combinaison linéaire du bruit de phase émetteur et du bruit de phase récepteur, lorsque ladite combinaison linéaire est reçue par le récepteur, à travers les étapes consistant à :

      sélectionner un premier sous-porteur (Pm) et un second sous-porteur (Pn), dans lequel m et n désignent, respectivement, l'indice du premier sous-porteur (Pm) et l'indice du second sous-porteur (Pn) ;
      à partir desdits sous-porteurs sélectionnés, obtenir une estimation de phase du premier sous-porteur (Pm') et une estimation de phase du second sous-porteur (Pn') ;

   **caractérisé en ce que** le calcul de la combinaison linéaire du bruit de phase émetteur et du bruit de phase récepteur pour obtenir l'estimation de bruit de phase récepteur (Pr') comprend l'étape consistant à estimer le bruit de phase récepteur (Pr') par intégration de premier ordre de la multiplication de **Ts/((n-m)Tcd)** par la différence entre l'estimation de phase du premier sous-porteur (Pm') et l'estimation de phase du second sous-porteur (Pn') ;
   dans lequel **Ts** est la période de symbole et **Tcd** l'intervalle de temps entre deux sous-porteurs adjacents, imposés par la dispersion chromatique pendant la propagation du signal à travers le canal optique.

2. Système selon la revendication précédente, dans lequel le traiteur de données électronique est également configuré pour obtenir, à partir de l'estimation de bruit de phase récepteur (Pr'), une estimation de bruit de phase émetteur (Pt') à travers les estimations de phase des sous-porteurs disponibles (Pj'), à travers les étapes consistant à :

   sélectionner une pluralité de sous-porteurs (Pj), dans lesquels j désigne l'indice de chaque sous-porteur parmi la pluralité de sous-porteurs sélectionnés ;
   obtenir une estimation de phase de chaque sous-porteur sélectionné (Pj') ;
   pour chaque estimation de phase de chaque sous-porteur sélectionné (Pj'), calculer une seconde estimation de phase de chaque sous-porteur sélectionné (Pj") en soustrayant de l'estimation de phase de chaque sous-porteur sélectionné (Pj') l'estimation de bruit de phase récepteur (Pr') retardé par des intervalles **(j-1)Tcd/Ts** ;
   estimer le bruit de phase émetteur (Pt') à travers la moyenne des valeurs de l'étape précédente, c'est-à-dire, la moyenne des secondes estimations de bruit de phase de chaque sous-porteur (Pj").

3. Système selon la revendication précédente, dans lequel le traiteur de données électronique est également configuré pour obtenir, à partir de l'estimation de bruit de phase émetteur (Pt'), une seconde estimation de bruit de phase récepteur (Pr") à travers les estimations de phase des sous-porteurs disponibles (Pj'), à travers les étapes consistant à :

   pour chaque sous-porteur (Pj) sélectionné, calculer une troisième estimation de phase de chaque sous-porteur (Pj") sélectionné, en soustrayant de chaque estimation de phase de sous-porteur disponible (Pj') l'estimation de bruit de phase émetteur (Pt') ;

obtenir une seconde estimation de bruit de phase récepteur (Pr") en calculant la moyenne de la dimension de **j** donnée par :

$$Pr''(k) = S(Pj'''(k + (j-1)Tcd/Ts))/N$$

dans lequel N est le nombre d'estimations de phase de sous-porteur disponibles (Pj').

4. Système selon les revendications 2 et 3, dans lequel le traiteur de données électronique est également configuré pour répéter, de manière itérative et alternée, les étapes des revendications 2 et 3 pour affiner successivement les estimations de bruit de phase de l'émetteur et du récepteur.

5. Système selon l'une quelconque des revendications 2-4, dans lequel le traiteur de données électronique est également configuré pour corriger le bruit de phase dans chaque sous-porteur à travers la combinaison linéaire de l'estimation de bruit de phase émetteur (Pt') et de l'estimation de bruit de phase récepteur (Pr', Pr").

6. Système selon l'une quelconque des revendications 2-5, dans lequel le traiteur de données électronique est également configuré pour obtenir la combinaison linéaire de l'estimation de bruit de phase émetteur (Pt') et de l'estimation de bruit de phase récepteur (Pr', Pr") pour un sous-porteur donné (Pi), pour compenser le bruit de phase dans ce sous-porteur (Pi), en calculant :

$$Pi'(k) = Pt'(k) + Pr'(k-(i-1)Tcd/Ts).$$

7. Système selon l'une quelconque des revendications 2-6, dans lequel le traiteur de données électronique est également configuré pour surveiller l'état du laser émetteur et du laser récepteur en surveillant indépendamment l'estimation de bruit de phase émetteur et l'estimation de bruit de phase récepteur.

8. Système selon l'une quelconque des revendications précédentes dans lequel le signal émis est optiquement modulé dans le signal généré par le laser émetteur.

9. Procédé de correction de bruit de phase dans un système optique multiporteur à canal optique cohérent pour la transmission de signal, dans lequel le système multiporteur comprend un émetteur optique pour émettre deux ou plus de sous-porteurs (SC) et un récepteur optique pour recevoir lesdits sous-porteurs (SC) ;

dans lequel le canal optique a une dispersion chromatique (CD), le laser de l'émetteur a un bruit de phase (Pt), et le laser du récepteur a un bruit de phase (Pr) ;
**caractérisé en ce que** le procédé comprend obtenir une estimation de bruit de phase récepteur (Pr') à travers la combinaison linéaire du bruit de phase émetteur et du bruit de phase récepteur, lorsque ladite combinaison linéaire est reçue par le récepteur, à travers les étapes consistant à :

sélectionner un premier sous-porteur (Pm) et un second sous-porteur (Pn), dans lequel **m** et **n** désignent, respectivement, l'indice du premier sous-porteur (Pm) et l'indice du second sous-porteur (Pn) ;
à partir desdits sous-porteurs sélectionnés, obtenir une estimation de phase du premier sous-porteur (Pm') et une estimation de phase du second sous-porteur (Pn') ;
estimer le bruit de phase récepteur (Pr') par intégration de premier ordre de la multiplication de **Ts/((n-m)Tcd)** par la différence entre l'estimation de phase du premier sous-porteur (Pm') et l'estimation de phase du second sous-porteur (Pn') ;

dans lequel **Ts** est la période de symbole et **Tcd** l'intervalle de temps entre deux sous-porteurs adjacents, imposés par la dispersion chromatique durant la propagation du signal à travers le canal optique.

10. Procédé selon la revendication précédente, dans lequel le procédé comprend obtenir, à partir de l'estimation de bruit de phase récepteur (Pr'), une estimation de bruit de phase émetteur (Pt') à travers les estimations de phase des sous-porteurs disponibles (Pj'), à travers les étapes consistant à :

sélectionner une pluralité de sous-porteurs (Pj), dans lequel j désigne l'indice de chaque sous-porteur parmi la pluralité de sous-porteurs sélectionnés ;

obtenir une estimation de phase de chaque sous-porteur sélectionné (Pj') ;

pour chaque estimation de phase de chaque sous-porteur sélectionné (Pj'), calculer une seconde estimation de phase de chaque sous-porteur sélectionné (Pj") en soustrayant de l'estimation de phase de chaque sous-porteur sélectionné (Pj') l'estimation de bruit de phase récepteur (Pr') retardé par les intervalles **(j-1)Tcd/Ts** ;

estimer le bruit de phase émetteur (Pt') à travers la moyenne des valeurs de l'étape précédente, c'est-à-dire, la moyenne des secondes estimations de bruit de phase de chaque sous-porteur (Pj").

**11.** Procédé selon la revendication précédente, dans lequel le procédé comprend obtenir, à partir de l'estimation de bruit de phase émetteur (Pt'), une seconde estimation de bruit de phase récepteur (Pr") à travers les estimations de phase de sous-porteurs disponibles (Pj'), à travers les étapes consistant à :

pour chaque sous-porteur (Pj) sélectionné, calculer une troisième estimation de phase de chaque sous-porteur (Pj") sélectionné, en soustrayant de chaque estimation de phase de sous-porteur disponible (Pj') l'estimation de bruit de phase émetteur (Pt') ;

obtenir une seconde estimation de bruit de phase récepteur (Pr") en calculant la moyenne de la dimension de **j** donnée par :

$$Pr''(k)= S(Pj'''(k + (j-1)Tcd/Ts))/N$$

dans lequel N est le nombre d'estimations de phase de sous-porteur disponibles (Pj').

**12.** Procédé selon les revendications 10 et 11, comprenant répéter, de manière itérative et alternée, les étapes des revendications 10 et 11 pour affiner successivement les estimations de bruit de phase de l'émetteur et du récepteur.

**13.** Procédé selon l'une quelconque des revendications 10-12, dans lequel le procédé comprend également l'étape consistant à corriger le bruit de phase dans chaque sous-porteur à travers la combinaison linéaire de l'estimation de bruit de phase émetteur (Pt') et de l'estimation de bruit de phase récepteur (Pr', Pr").

**14.** Procédé selon l'une quelconque des revendications 10-13, dans lequel le procédé comprend également l'étape consistant à obtenir la combinaison linéaire de l'estimation de bruit de phase émetteur (Pt') et de l'estimation de bruit de phase récepteur (Pr', Pr") pour un sous-porteur donné (Pi), pour compenser le bruit de phase dans ce sous-porteur (Pi), en calculant :

$$Pi'(k)=Pt'(k)+Pr'(k-(i-1)Tcd/Ts).$$

**15.** Moyen de stockage de données non-transitoire comprenant des instructions de programmation informatique pour mettre en place un système de traitement de signal digital pour la correction de bruit de phase dans un système optique multiporteur à canal optique cohérent pour la transmission de signal, les instructions de programmation informatique incluant des instructions qui, lorsqu'elles sont exécutées par un processeur, font en sorte que le processeur exécute le procédé selon l'une quelconque des revendications 9-14.

**Fig. 1**

**Fig. 2**

**Fig. 3**

**Fig. 4**

501

503

+

504

505

502

**Fig. 5**

Transmitter

DSP

Optical
front

SC #1

SC #m

LASER

601

SC #n

SC #NSC

**Fig. 6**

Receiver

Optical
Front

DSP

701

SC #1

SC #m

LO

SC #n

SC #NSC

**Fig. 7**

**Fig. 8**

**Fig. 9**

**Fig. 10**

20

**Fig. 11**

**Fig. 12**

**EP 4 145 723 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8467690 B2
- US 2011020005 A1
- US 10404380 B2
- US 2018269985 A1
- KR 102000398 B1